# EUROPEAN PATENT APPLICATION

(11) **EP 3 385 407 A2**
(43) Date of publication of application: **10.10.2018**
(21) Application number: 18159921.8
(22) Date of filing: 05.03.2018
(51) Int. Cl.: C23C 28/00, C23C 4/04, C23C 4/10, C23C 4/134, C04B 41/52

(54) **CMAS-RESISTANT ENVIRONMENTAL BARRIER AND THERMAL BARRIER COATINGS**

(30) Priority: 03.04.2017 US 201762480785 P
(71) Applicant: Rolls-Royce Corporation, Indianapolis, Indiana 46225 (US); Rolls-Royce plc, London SW1E 6AT (GB)
(72) Inventor: Ndamka, Ngunjoh L, Derby, Derbyshire DE24 8BJ (GB); Bolcavage, Ann, Indianapolis, IN Indiana 46220 (US)
(74) Representative: Rolls-Royce plc

(57) **Abstract**

In some examples, an article for a high-temperature mechanical system includes a substrate and a doped calcia-magnesia-alumina-silicate resistant (doped CMAS-resistant) layer on the substrate. The doped CMAS-resistant layer is a thermal barrier coating or an environmental barrier coating and includes a calcia dopant.

## Description

### TECHNICAL FIELD

The disclosure relates to thermal barrier coatings and environmental barrier coatings for use in high-temperature mechanical systems such as gas turbine engines and techniques for forming the coatings.

### BACKGROUND

Components of high temperature mechanical systems, such as gas turbine engines, operate in severe, high-temperature environments. For example, the turbine blades and vanes of a gas turbine engine are exposed to hot gases and reactive materials that may cause the surface of the component to reach temperatures in excess of 1000°C. The components of such high temperature mechanical systems may include metal alloys or ceramic-based materials designed to withstand such high temperatures.

High strength metal alloys (e.g., nickel or cobalt based superalloys) may be useful in a variety of contexts where strength is important. While such components may offer great strength and impact resistance, such components may be susceptible to degradation and fatigue associated with the extreme temperature fluctuations and deleterious reactions observed in the extreme operational environments such as that of a gas turbine engine. Thus, in some examples, a high strength metal alloy material may be coated with a thermal barrier coating, which may thermally insulate the substrate from the extreme temperatures present in the operating environment of high temperature mechanical systems.

Ceramic or ceramic matrix composite (CMC) materials may be useful in a variety of contexts where mechanical and thermal properties are important. Ceramic or CMC materials may be resistant to high temperatures, but some ceramic or CMC materials may react with some elements and compounds present in the operating environment of high temperature mechanical systems, such as water vapor. Reaction with water vapor may result in the recession of the ceramic or CMC material. These reactions may damage the ceramic or CMC material and reduce mechanical properties of the ceramic or CMC material, which may reduce the useful life of the component. Thus, in some examples, a ceramic or CMC material may be coated with an environmental barrier coating, which may reduce exposure of the substrate to elements and compounds present in the operating environment of high temperature mechanical systems.

### SUMMARY OF THE DISCLOSURE

According to a first aspect of the present disclosure an article for a high-temperature mechanical system includes a substrate and a doped calcia-magnesia-alumina-silicate resistant (doped CMAS-resistant) layer on the substrate, the doped CMAS-resistant layer is a thermal barrier coating or an environmental barrier coating and includes a calcia dopant.

Optionally, the article further comprises a bond layer between the substrate and the doped CMAS-resistant layer.

Optionally, the substrate comprises a high strength metal alloy, and the doped CMAS-resistant layer is a thermal barrier coating comprising:
zirconia or hafnia;
the calcia dopant; and
at least one rare earth oxide.

Optionally, the doped CMAS-resistant layer, as deposited, comprises between about 86 and about 93 mole percent (mol.%) zirconia or hafnia and between about 7 and about 14 mol.% of a combination of the calcia dopant and the at least one rare earth oxide.

Optionally, the at least one rare earth oxide comprises yttria.

Optionally, the article further comprises a bond layer between the doped CMAS-resistant layer and the substrate, the bond layer comprising a metal alloy.

Optionally, the substrate comprises a ceramic or ceramic matrix composite (CMC) and the doped CMAS-resistant layer is an environmental barrier coating comprising:
at least one rare earth silicate; and
the calcia dopant.

Optionally, the doped CMAS-resistant layer as deposited comprises between about 86 and about 93 mole percent (mol.%) of the at least one rare earth silicate and between about 7 and about 14 mol.% of the calcia dopant.

Optionally, the at least one rare earth silicate comprises ytterbium silicate.

Optionally, the article further comprises a bond layer between the doped CMAS-resistant layer and the substrate, the bond layer comprising silicon.

Optionally, the doped CMAS-resistant layer is a single layer and is the only thermal barrier coating, environmental barrier coating, or CMAS-resistant coating on the article.

According to a second aspect of the present disclosure a method of forming an article for a high-temperature mechanical system, includes forming a doped calcia-magnesia-alumina-silicate resistant (doped CMAS-resistant) layer on the substrate, where the doped CMAS-resistant layer includes a thermal barrier coating or an environmental barrier coating, and where the doped CMAS-resistant layer includes a calcia dopant.

Optionally, the doped CMAS-resistant layer is a single layer and is the only thermal barrier coating or environmental barrier coating on the article.

Optionally, forming the doped CMAS-resistant layer comprises plasma spraying a fine particle mixture on the substrate, the fine particle mixture comprising:
the calcia dopant; and
one of the following:
   at least one rare earth silicate; or
   a mixture of at least one rare earth oxide and zirconia or hafnia.

Optionally, the doped CMAS-resistant layer as deposited comprises between about 86 and about 93 mole percent (mol.%) of the at least one rare earth silicate and between about 7 and about 14 mol.% of the calcia dopant, wherein the at least one rare earth silicate comprises ytterbium silicate.

Optionally, the doped CMAS-resistant layer as deposited comprises between about 86 and about 93 mole percent (mol.%) zirconia or hafnia and between about 7 and about 14 mol.% of the calcia dopant and the at least one rare earth oxide.

Optionally, the method further comprises:
forming a bond layer on the substrate, wherein the bond layer is between the doped CMAS-resistant layer and the substrate.

According to a third aspect of the present disclosure an article includes a substrate comprising ceramic or ceramic matrix composite (CMC), and a doped calcia-magnesia-alumina-silicate resistant environmental barrier coating (doped CMAS-resistant EBC) including ytterbium silicate and a calcia dopant.

Optionally, the doped CMAS-resistant EBC as deposited comprises between about 86 and about 93 mole percent (mol.%) of ytterbium silicate and between about 7 and about 14 mol.% of the calcia dopant.

Optionally, the doped CMAS-resistant EBC is a single layer and is the only EBC or CMAS-resistant coating on the article.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a schematic diagram illustrating a cross-sectional view of an example article including a substrate, one or more optional layers, and a calcia doped CMAS-resistant layer.
FIG. 2 is a schematic diagram illustrating a cross-sectional view of an example article including a substrate, an optional bond layer, and a calcia doped CMAS-resistant TBC layer.
FIG. 3 is a schematic diagram illustrating a cross-sectional view of an example article including a substrate, an optional bond layer, and a calcia doped CMAS-resistant EBC layer.
FIG. 4 is a flow diagram illustrating an example technique of forming an article that includes a substrate, one or more optional layers, and a calcia doped CMAS-resistant layer.

### DETAILED DESCRIPTION

The disclosure describes thermal barrier coatings (TBCs) and environmental barrier coatings (EBCs) for use on components of high temperature mechanical systems including, for example, various components or articles for a gas turbine engine, along with systems and techniques for forming TBCs and EBCs. The described TBCs and EBCs may provide thermal or environmental protection for the underlying substrate material(s) such as a high strength metal alloy, a ceramic, or a ceramic matrix composite (CMC) article.

In the context of gas turbine engines, increasing demands for greater operating efficiency (e.g., fuel efficiency) has led to the operation of gas turbine engines at higher temperatures. The development of TBCs and EBCs has allowed such high temperatures to be obtained without damaging the underlying substrate materials. The increased operating temperatures, however, may lead to increased damage due to the presence of calcia-magnesia-alumina-silicate (CMAS) deposits within the high temperature environments. The presence of CMAS deposits in the high temperature environments of a gas turbine engine result from the ingestion of siliceous minerals (e.g., airborne dust, sand, volcanic dust and ashes, fly ash, runway debris, concrete dust, fuel residue, and the like) in the intake gas drawn through the gas turbine engine. While CMAS is used as a term used to generally describe such deposits, it is understood that the CMAS deposits and the associated reactions may involve a large number of different compounds and reactive species; however, calcia (CaO), magnesia (MgO), alumina (Al₂O₃), and silica (SiO₂) are recognized as being the predominant oxides associated with the CMAS deposits.

Some of the CMAS deposits have a melting temperatures in the vicinity of about 1200 °C to about 1250 °C (e.g., about 2200 °F to about 2300 °F). Therefore, due to the high temperature environments in which the described components are operated, the CMAS deposits may melt and accumulate on the outer surfaces of the components of the gas turbine engine. Additionally, or alternatively, the molten CMAS deposits may diffuse into one or more of the outer coating layers of the component. In some examples, the materials forming the various coating layers or underlying substrate may react with one or more of the CMAS deposits through a series of complex reactions, damaging the component (e.g., the coatings) in the process.

Additionally, in some examples, when the component cools below melting temperature of the CMAS deposits, the CMAS deposit will solidify and exert a strain on the outer coating layers leading to the development of fractures and/or spallation of the outer coating layers. In all, the deleterious reactions and damage associate with CMAS may significantly reduce the useful life of the outer coating layers or underlying component.

In some examples, the TBCs and EBCs describe herein may include a dopant material (e.g., calcia). As described further below, the inclusion of the dopant material (e.g., calcia) into the outer TBC or EBC layers may significantly reduce or inhibit the ingress of CMAS and or the deleterious side reactions associated with the diffusion of CMAS into the outer TBC or EBC layers. In some examples, the presence of the dopant material may enable a single TBC or EBC layer to provide similar or improved CMAS resistance compared to a coating including a dedicated, additional CMAS-resistant layer on a TBC or EBC layer.

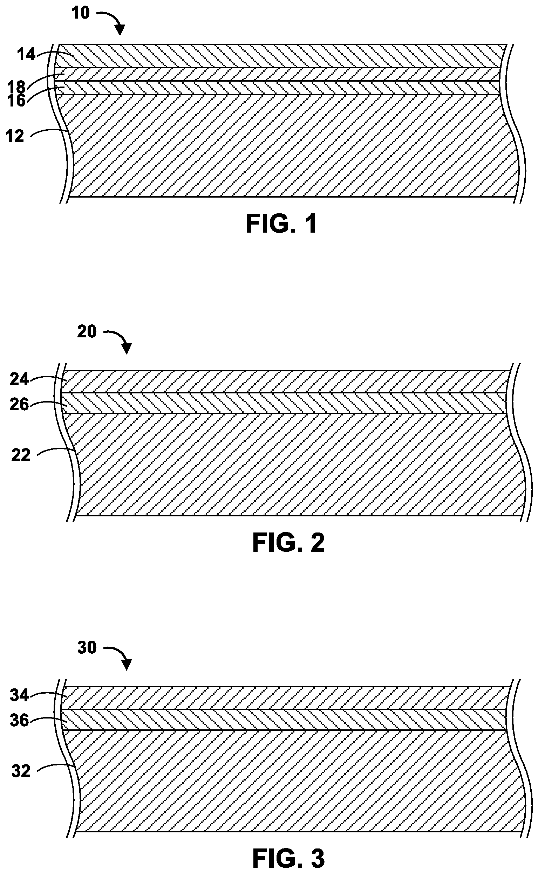

FIG. 1 shows a cross-sectional view of an example article 10 for use in a high temperature mechanical system that includes a substrate 12, and doped CMAS-resistant layer 14 applied to at least a portion of the substrate 12. CMAS-resistant layer 14 may be either a TBC or an EBC and includes a calcia (e.g., calcium oxide - CaO) dopant. Article 10 may be a component of a high temperature mechanical system, such as, for example, a gas turbine engine or the like. Example aerospace components may include, for example, seal segments, shrouds, combustion tubes, blade tracks, disc assemblies, airfoils (e.g., blades or vanes), combustion chamber liners, or the like, of a gas turbine engine.

Any suitable material may be used to form substrate 12. In some examples, substrate 12 may include a high strength metal alloy (e.g., a superalloy). Suitable high strength metal alloys may include Si-containing metal alloys such as molybdenum-silicon alloys (e.g., MOSi₂) and niobium-silicon alloys (e.g. NbSi₂), or a superalloy based on Ni, Co, Ni/Fe, or the like. In some examples, substrate 12 may include a Ni-based or Co-based superalloy. In some examples, Ni-based superalloys may be suitable for use in a gas turbine engine disk, gas turbine engine airfoil, or gas turbine engine spacer. The high strength metal alloy from which a substrate 12 is formed may satisfy certain design criteria including, for example, relatively high yield strength and tensile strength to inhibit yield and fracture of the component, relatively high ductility and fracture toughness to impart tolerance to defects, relatively high resistance to initiation of fatigue cracks, and relatively low fatigue crack propagation rates. Such alloy components may include other additive elements to alter one or more mechanical or chemical properties of substrate 12 including, for example, the toughness, hardness, temperature stability, corrosion resistance, oxidation resistance, or the like of substrate 12. Additional example superalloy materials for producing substrate 12 may include, for example, those available from Martin-Marietta Corp., Bethesda, Md., under the trade designation MAR-M002 and MAR-M247; those available from Cannon-Muskegon Corp., Muskegon, Mich., under the trade designations CMSX-3, CMSX-4, CMSX-10; and the like.

Properties of the high strength metal alloy from which substrate 12 is formed may be a function of the composition, the phase constitution, and the microstructure of the alloy. The microstructure of the metal alloy may include the grain size of the alloy and a precipitate phase composition, size, and volume fraction. In some examples, the phase constitution and microstructure of the high strength metal alloy may be affected by mechanical and thermal processing of the alloy. For example, thermal processing, e.g., heat treatment, of the high strength metal alloy may affect grain structure of the resultant alloy, precipitate phase size and/or composition, or the like.

In some examples, substrate 12 includes a polycrystalline Ni-based superalloy, which includes a plurality of grains. Substrate 12 may include at least one of Al, Ti, or Ta in addition to Ni. In some examples, a concentration of elements, such as between about 2 weight percent (wt. %) and about 5 wt. % Al, between about 2 wt. % and about 5 wt. % Ti, and less than about 3 wt. % tantalum (Ta), in substrate 12 may be sufficient to result in gamma-prime (γ') precipitate formation in substrate 12. For example, the concentration of Al, Ti, and/or Ta in substrate 12 may result in a γ' precipitate phase volume fraction between about 40 volume percent (vol. %) and about 55 vol. %. In some instances, higher or lower elemental contents of the individual gamma prime forming elements can be employed while maintaining the overall gamma prime phase fraction at desired levels for properties such as strength and ductility. The volume fraction, size, and distribution of the γ' precipitate phase may be influenced by the alloy composition, heat treatment temperature, heat treatment duration, and cooling rate during heat treatment. Additionally, in some examples, substrate 12 may include grain sizes between about 5 micrometers (µm) in diameter to between about 30 µm and about 50 µm or more in diameter, engineered for a combination of yield strength, resistance to fatigue crack initiation, creep strength, and resistance to fatigue crack growth. In some examples, substrate 12 may include additional elements that segregate to grain boundaries of substrate 12. The segregating elements may affect creep resistance and low-cycle fatigue resistance of substrate 12. Examples of segregating elements include boron (B; up to about 0.03 weight percent (wt. %) of substrate 12), carbon (C; up to about 0.05 wt. % of substrate 12), and zirconium (Zr; up to about 0.1 wt. % of substrate 12).

In other examples, substrate 12 may include a ceramic or CMC material. The ceramic or CMC may include any useful ceramic or ceramic matrix material including, for example, Si-containing ceramics, such as silica, silicon carbide, silicon nitride, composites having a SiC or Si₃N₄ matrix, aluminosilicates, or silicon oxynitride; aluminum oxynitrides; alumina; and the like. In examples where substrate 12 includes a CMC, substrate 12 may further include any desired filler material, such as continuous or discontinuous reinforcement materials in the form of whiskers, platelets, fibers, or particulates. In some examples, the filler material may include a continuous monofilament or multifilament woven or non-woven fibers. The selection of filler material, its respective shape, size, and architecture (e.g., woven or non-woven) may depend in part on the desired properties to the resultant CMC based article. For example, in some implementations, the filler material may be selected to increase the toughness of a brittle ceramic matrix. In other examples, the filler material may be chosen to provide a desired property to substrate 12, such as thermal conductivity, electrical conductivity, thermal expansion, hardness, and the like. In some examples, the filler composition may be the same as the ceramic matrix material. For example, substrate 12 may include silicon carbide fibers embedded in a silicon carbide matrix. In other examples, the filler material may include a different composition than the ceramic matrix material.

Substrate 12 may be manufactured using any suitable technique. For example, depending on its selected composition and construction, substrate 12 may be formed using a cast-mold process, chemical vapor deposition (CVD), chemical vapor infiltration (CVI), polymer impregnation and pyrolysis (PIP), liquid polymer infiltration (LPI), slurry infiltration, liquid silicon infiltration (LSI), melt infiltration (MI), CVI in combination with MI, or other techniques.

In some examples, doped CMAS-resistant layer 14 on substrate 12 may be either a TBC layer or an EBC layer including a calcia dopant. The inclusion of the calcia dopant in doped CMAS-resistant layer 14 has been found to improve the resistance of the doped CMAS-resistant layer 14 to degradation attributed to the presence of CMAS on or in layer 14. For example, the reaction mechanisms associated with CMAS formation and degradation are not fully understood by those in the art, and the CMAS associated reactions are recognized as being complicated, highly esoteric, and difficult to fully characterize. In some examples, there are many reactive intermediates and products associated with CMAS reactions that involve both acidic and basic driven reaction mechanisms. It was discovered by the current inventors that adding calcia (i.e., a primary component of CMAS) as a dopant to a TBC or EBC created an unexpected improvement in the ability of doped CMAS-resistant layer 14 to resist the deleterious effects associated with CMAS degradation compared to an undoped layer. Without wanting to be bound to a specific scientific theory, it is believed the initial presence of calcia in doped CMAS-resistant layer 14 disrupts some of the reaction mechanisms associated with CMAS by disturbing the chemical equilibrium of one or more of the CMAS reaction(s). In particular, because the concentration of calcia within doped CMAS-resistant layer 14 is comparatively high (e.g., compared to other non-doped layers or those with other dopant materials), the initial concentration of calcia lowers one or more of the reaction rates associated with CMAS degradation, thereby creating a reaction gradient within doped CMAS-resistant layer 14 and slowing the reactions between doped CMAS-resistant layer 14 and one or more of the deleterious compounds and/or reactive intermediates associated with CMAS.

Additionally, while again not wishing to be bound by a specific scientific theory, it is believed that the formation of calcia as a component of CMAS is attributed to the basic driven reactions associated with CMAS generation. Therefore, in some examples, by having an initial presence of the calcia dopant in doped CMAS-resistant layer 14, the basic driven reactions associated with CMAS are collectively slowed due to the reaction gradient. In some such examples, the slowed basic driven reactions may free up other components in doped CMAS-resistant layer 14 to help combat and mitigate one or more of the acidic driven reactions associated with CMAS. For example, in some examples where doped CMAS-resistant layer 14 is configured as a TBC that includes hafnia or zirconia stabilized with one or more rare earth oxides (e.g., yttria), the inclusion of calcia may impede one or more of the basic driven reactions associated with CMAS, thereby freeing the one or more rare earth oxides (e.g., yttria) and zirconia to act in an acidic manner thereby creating an acidic chemical gradient in the coating that may help to slow/mitigate reaction between the coating and the active silica species in the CMAS.

Additionally or alternatively, the presence of calcia in doped CMAS-resistant layer 14 may further act to slow the molecular diffusion of CMAS into doped CMAS-resistant layer 14 due to the reduced concentration gradient established by initially incorporating a component of CMAS into doped CMAS-resistant layer 14.

In some examples, article 10 may include one or more optional underlying layers 16, 18 set between substrate 12 and CMAS-resistant layer 14. In some examples, the one or more optional underlying layers 16, 18 may include a bond layer, a diffusion barrier layer, a passively formed layer (e.g., scale layer), a dedicated EBC layer, a dedicated TBC layer, or combinations thereof and the like. It will be appreciated that while additional layers may be included in the design and construction of article 10, the improved design of doped CMAS-resistant layer 14 may permit the exclusion of different layers (e.g., a dedicated EBC layer or a dedicated TBC layer separate from doped CMAS-resistant layer 14) or reduce the total number of various coating layers included in the design of article 10 to provide sufficient thermal or environmental protection to substrate 12. For example, doped CMAS-resistant layer 14 may be applied as a single layer, such that doped CMAS-resistant layer 14 is the only dedicated TBC, EBC, CMAS-resistant layer included in article 10. Additionally or alternatively, article 10 may include one or more functional top coats (e.g., an abradable coating) on doped CMAS-resistant layer 14.

In some examples, doped CMAS-resistant layer 14 may be relatively thin (e.g., in comparison to a multi-layer system with a TBC/EBC layer and a CMAS-resistant layer). In some examples, doped CMAS-resistant layer 14 may define a thickness between about 10 micrometers (µm) and about 500 µm (e.g., about 0.0005 inches to about 0.020 inches).

Doped CMAS-resistant layer 14 may be either a TBC layer or an EBC layer. The determination of whether CMAS-resistant layer 14 is to be configured as a TBC or EBC may be dependent on the particular application for article 10 (e.g., whether article is to be used as a hot section component or cold section component of a gas turbine engine), the underlying material selection for substrate 12 (e.g., superalloy material or ceramic/CMC), or both. For example, in some implementations in which substrate 12 includes a high strength metal alloy, doped CMAS-resistant layer 14 may be a TBC layer to provide enhanced thermal insulation for the underlying material of substrate 12. Alternatively, where substrate 12 includes ceramic or CMC materials, doped CMAS-resistant layer 14 may be an EBC layer to provide enhanced environmental protection (e.g., water vapor barrier priorities) for the underlying material of substrate 12. The usefulness of the calcia dopant in doped CMAS-resistant layer 14 may function to increase the ability of the layer to resist CMAS degradation in both EBC and TBC layer configurations.

Additionally, or alternatively, doped CMAS-resistant layer 14 may include a columnar microstructure. The columnar microstructure may mitigate stress due to thermal expansion mismatches between doped CMAS-resistant layer 14 and other optional layers 16, 18. For example, a columnar microstructure may have microcracks or microgaps that extend through at least a portion of the layer in a direction that is substantially orthogonal to the plane defined by the layer surface. Because of the microgaps, a columnar microstructure may have enhanced mechanical compliance under thermal cycling or when a temperature gradient exists, such as when a high-temperature system is first engaged. Additionally, a layer having a columnar microstructure may provide improved thermal protection to substrate 32 compared to a layer that is substantially nonporous. While not wishing to be bound by scientific theory, the microcracks or microgaps may provide scattering sites for thermal energy-carrying phonons, which may lower an effective thermal conductivity of a layer having a columnar microstructure compared to a substantially nonporous layer of a similar composition. The columnar microstructure may be formed using plasma spray physical vapor deposition (PS-PVD) to deposit the layer via feeding the material at a rate so that less than all of the coating material is vaporized by plasma resulting in the material being deposited with a columnar microstructure.

In some examples, doped CMAS-resistant layer 14 may be a TBC layer. For example, FIG. 2 shows an example article 20 that includes a substrate 22, a doped CMAS-resistant TBC layer 24, and an optional bond layer 26 between substrate 22 and doped CMAS-resistant TBC layer 24. Doped CMAS-resistant TBC layer 24 may provide thermal protection (i.e., thermal insulation) to underlying substrate 22 as well as improved resistance to CMAS degradation. For example, in implementations in which article 20 is a hot section component for a gas turbine engine, such as a flame tube, combustor liner, air foil, or the like, the combustion environment and associated gases may reach temperatures between about 1200 °C to about 2000 °C during operation. In some such examples, the temperatures of the combustion environment may exceed the softening or melting point of substrate 22. The presence of doped CMAS-resistant TBC layer 24 may thermally insulate substrate 22, thereby allowing the combustion environment to be operated at the higher temperatures for a longer period of time while allowing underlying materials of substrate 22 to remain relatively cool (e.g., below the softening or melting point of substrate 22). In some such examples, substrate 22 may include a high strength metal alloy, such as a superalloy based on Ni, Co, Ni/Fe, or the like. Example superalloy materials for substrate 22 may include, for example, MAR-M002, MAR-M247, CMSX-3, CMSX-4, or CMSX-10.

In some examples, doped CMAS-resistant TBC layer 24 may include zirconia or hafnia, alone or in combination, combined with one or more rare earth oxides, such as, for example yttria-stabilized zirconia or yttria-stabilized hafnia, as well as a calcia dopant (CaO). Suitable rare earth oxides include oxides of Lu (lutetium), Yb (ytterbium), Tm (thulium), Er (erbium), Ho (holmium), Dy (dysprosium), Tb (terbium), Gd (gadolinium), Eu (europium), Sm (samarium), Pm (promethium), Nd (neodymium), Pr (praseodymium), Ce (cerium), La (lanthanum), Y (yttrium), or Sc (scandium).

The inclusion of the calcia dopant in doped CMAS-resistant TBC layer 24 may provide the layer with increased resistance to the detrimental effects of CMAS by reducing the ingress and/or reactivity of doped CMAS-resistant TBC layer 24 with CMAS. In some examples, doped CMAS-resistant TBC layer 24 may form a metastable tetragonal-prime crystalline phase, a cubic crystalline phase, or a compound phase (Re₂Zr₂O₇ or Re₂Hf₂O₇) depending on the relative amounts of rare earth oxides and calcia added to the layer. In some examples, a metastable tetragonal-prime crystalline phase or a cubic crystalline phase may be obtained using a total amount of rare earth oxides and calcia in the layer 24 of between about 5 mole percent (mol.%) and about 14 mol.%.

In some examples, doped CMAS-resistant TBC layer 24 may include the calcia dopant, yttria, and either zirconia or hafnia. In some such examples, the calcia in combination with the yttria present in the TBC layer may have a synergistic effect by slowing both the acidic and basic reactions associated with CMAS degradation.

The calcia dopant may be added to doped CMAS-resistant TBC layer 24 in an amount between about 2 mol.% to about 14 mol.% based on the compositional makeup of doped CMAS-resistant TBC layer 24 as deposited (e.g., relative to the presence the one or more rare earth oxides (e.g., yttria) and either zirconia or hafnia in the deposited state prior to being exposed to the operating environment). In some examples, of the amount of calcia added to doped CMAS-resistant TBC layer 24 may be offset by removal of one or more of the rare earth oxides from the zirconia or hafnia based layer. For example, yttria stabilized zirconia may include about 2-40 mol.% yttria and about 60-98 mol.% zirconia. Adding the calcia dopant to the composition may be offset by removing a comparable molar amount of yttria from the composition such that the total amount of zirconia remains between about 60-98 mol.%. In some examples, the as deposited doped CMAS-resistant TBC layer 24 may include between about 7 mol.% and about 14 mol.% calcia and yttria collectively and between about 86 and about 93 mol.% zirconia. Additionally or alternatively, the relative ratio of calcia to yttria in doped CMAS-resistant TBC layer 24 may be between about 2:5 (mol:mol) and about 4:3 (mol:mol).

Additionally, or alternatively, doped CMAS-resistant TBC layer 24 may include a columnar microstructure to improve the thermal insulation properties of the layer. In some examples, the porosity level of the columnar microstructure may be controlled by employing specific deposition method, for example suspension plasma spray, electron beam physical vapor deposition and plasma spray physical vapor deposition, ranging between about 2-25% porosity.

In some examples, article 20 may include an optional bond layer 26 between doped CMAS-resistant TBC layer 24 and substrate 22. Optional bond layer 26 may include any suitable material(s) configured to improve adhesion between substrate 22 and doped CMAS-resistant TBC layer 24. For example, when substrate 22 includes a high strength metal alloy (e.g., Ni or Co based superalloy), bond layer 26 may likewise include an alloy, such as an MCrAlY alloy (where M is Ni, Co, or NiCo), a *β*NiAl nickel aluminide alloy (e.g., either unmodified or modified by Pt, Cr, Hf, Zr, Y, Si, and combinations thereof), a γ-Ni+γ'-Ni₃Al nickel aluminide alloy (either unmodified or modified by Pt, Cr, Hf, Zr, Y, Si, and combination thereof), or the like.

In some examples, the composition and resulting phase constitution of optional bond layer 26 may be selected based on the chemical composition and phase constitution of substrate 22 and CMAS-resistant TBC layer. For example, if substrate 22 includes a superalloy with a γ-Ni+γ'-Ni₃Al nickel phase constitution, optional bond layer 26 may likewise include γ-Ni+γ'-Ni₃Al nickel phase constitution to provide better matching of coefficient of thermal expansion (CTE) between the layers. Such matching of CTEs between the layers may increase the mechanical stability (adhesion) between optional bond layer 26 and substrate 22 or doped CMAS-resistant TBC layer 24.

doped CMAS-resistant TBC layer 24 and optional bond layer 26 may be deposited on substrate 22 using any suitable technique including, for example, plasma spraying, suspension plasma spray, plasma spray physical vapor deposition, physical vapor deposition, chemical vapor deposition, directed vapor deposition, electron beam physical vapor deposition, or the like. For example, doped CMAS-resistant TBC layer 24 may be deposited using plasma spraying, wherein each or the respective components (e.g. calcia, yttria, and zirconia) are provided as a relatively fine powder (e.g., an average particle size of less than about 5 micrometers) and either mixed together prior to being sprayed or as a result of the spraying process.

In some examples, CMAS-resistant TBC layer may be relatively thin (e.g., in comparison to a multi-layer system with a TBC layer and a CMAS-resistant layer). In some examples, doped CMAS-resistant TBC layer 24 may define a thickness between about 10 micrometers (µm) and about 500 µm (e.g., about 0.0005 inches to about 0.020 inches).

In some examples, doped CMAS-resistant layer 14 may be an EBC layer. For example, as described above, substrate 12 may include a ceramic or CMC material such as, for example, a silicon carbide fibers embedded in a silicon carbide matrix. A substrate composed of ceramic or CMC component may be beneficial due to the ability of the substrate to be used at high operating temperatures compared to similar components composed with a high strength metal alloy. However, the underlying ceramic or CMC materials of such substrates have been found to be more prone to degradation caused by oxidation and/or water vapor compared to the high strength metal alloy counterparts. For example, at high temperatures, water vapor can react with the ceramic or CMC materials, e.g., silicon in a silicon carbide/silicon carbide (SiC/SiC) CMC, volatilizing the outer edge of the component and resulting in the slow regression of the CMC cross section. In such examples, doped CMAS-resistant layer 14 may be configured as an EBC layer to provide enhanced environmental protection to underlying substrate 12.

FIG. 3 shows an example article 30 that includes a substrate 32, a doped CMAS-resistant EBC layer 34, and an optional bond layer 36 deposited between substrate 32 and doped CMAS-resistant EBC layer 34. Doped CMAS-resistant EBC layer 34 may provide enhance environmental protection to underlying substrate 32 as well as improved resistance to CMAS degradation.

In some examples, doped CMAS-resistant EBC layer 34 may include one or more rare earth silicates doped with calcia. The rare earth silicates may include one or more rare earth monosilicates in accordance with the formula ReSiO₅, one or more rare earth disilicates in accordance with the formula Re₂Si₂O₇, or both, where Re represents a rare earth element selected from the list consisting of Lu (lutetium), Yb (ytterbium), Tm (thulium), Er (erbium), Ho (holmium), Dy (dysprosium), Tb (terbium), Gd (gadolinium), Eu (europium), Sm (samarium), Pm (promethium), Nd (neodymium), Pr (praseodymium), Ce (cerium), La (lanthanum), Y (yttrium), or Sc (scandium). In some such examples, the calcia dopant may be added to doped CMAS-resistant EBC layer 34 in an amount between about 7 mol.% and about 14 mol.%.

In some examples, doped CMAS-resistant EBC layer 34 may include ytterbium silicate (e.g., YbSiO₅, Yb₂SiO₇, or both) in combination with the calcia dopant. EBC layers that include ytterbium silicate have been found to exhibit improved resistance to water vapor infiltration and degradation compared to other rare earth silicates (e.g., yttria silicate), but have likewise been found to be more susceptible to CMAS degradation compared to other coatings that include rare earth silicates. The combination of a doped CMAS-resistant EBC layer 34 including both ytterbium silicate and a calcia dopant may provide both improved resistance to water vapor infiltration and degradation as well as CMAS-resistant compared to a traditional EBC coating.

In some examples, doped CMAS-resistant EBC layer 34 may include ytterbium disilicate (e.g., Yb₂SiO₇) and the calcia dopant (e.g., deposited as coating of using only ytterbium disilicate and calcia). Ytterbium disilicate may provide a better oxygen barrier compared to ytterbium monosilicate, thereby reducing a rate at which a silica scale forms at an internal layer boundary, e.g., a boundary between optional bond layer 36 and doped CMAS-resistant EBC layer 34 or between substrate 32 and doped CMAS-resistant EBC layer 34. In some examples, the presence of a silica scale may reduce the EBC life by increasing coating stress, which may lead to early spallation of the outer layers. Slow growth of silica scale under doped CMAS-resistant EBC layer 34 including calcia doped ytterbium disilicate may be attributed to stronger chemical bonding and reduced oxygen diffusion. In some examples, doped CMAS-resistant EBC layer 34 may include between about 2 mol.% and 14 mol.% calcia, with the remainder of the layer (e.g., about 86 mol.% and 98 mol.%) made of ytterbium disilicate based on the composition of the layer as deposited (e.g., before operational use).

In some examples, doped CMAS-resistant EBC layer 34 may have a dense microstructure, a columnar microstructure, or a combination of dense and columnar microstructures. A dense microstructure may be more effective in preventing the infiltration of environmental contaminants, while a columnar microstructure may be more strain tolerant during thermal cycling. The combination of dense and columnar microstructures may be more effective in preventing the infiltration of CMAS or other environmental contaminants than a fully columnar microstructure while also being more strain tolerant during thermal cycling than a fully dense microstructure. In some examples, doped CMAS-resistant EBC layer 34 with a dense microstructure may have a porosity of less than about 20 vol. %, such as less than about 15 vol. %, less than 10 vol. %, or less than about 5 vol. %, where porosity is measured as a percentage of pore volume divided by total volume of the doped CMAS-resistant EBC layer 34, and may be measured using optical microscopy, mercury porosimetry, or the like. Additionally, or alternatively, doped CMAS-resistant EBC layer 34 may include a columnar microstructure to improve the thermal insulation properties of the layer.

Article 30 also includes optional bond layer 36. Similar to bond layer 26, bond layer 36 may include any suitable material(s) configured to improve adhesion between substrate 32 and doped CMAS-resistant EBC layer 34. For example, when substrate 32 includes a ceramic or CMC, bond layer 36 may likewise include ceramics or other materials that are compatible with the underlying ceramic of CMC substrate 32. For example, bond layer 36 may include silicon, mullite, or the like. In some examples, optional bond layer 36 may further include other elements, such as one or more rare earth silicates (e.g., disilicate or monosilicate), one or more rare earth oxides to enhance the bonding between substrate 32, doped CMAS-resistant EBC layer 34, or both. In some examples, the materials of optional bond layer 36 may be selected to provide better matching of coefficient of thermal expansion (CTE) between the layers. Such matching of CTEs between the layers may increase the mechanical stability (adhesion) between bond layer 36 and substrate 32 or doped CMAS-resistant EBC layer 34.

In some examples, bond layer 36 may include silicon metal, alone, or mixed with at least one other constituent. For example, bond layer 36 may include silicon metal and at least one of a transition metal carbide, a transition metal boride, a transition metal nitride, mullite (aluminum silicate, Al₆Si₂O₁₃), silica, a silicide, an oxide (e.g., a rare earth oxide, an alkali oxide, or the like), a silicate (e.g., a rare earth silicate or the like), or the like. The transition metal carbide (e.g., silicon carbide) may modify the oxidation resistance of bond layer 36, modify chemical resistance of bond layer 36, influence the CTE of bond layer 36, improve silicon melt infiltration into bond layer 36, or the like. In some examples, the slurry may include sufficient transition metal carbide particles so that bond layer 36 includes between about 1 vol.% and about 40 vol.% transition metal carbide (e.g., silicon carbide), between about 1 vol. % and about 20 vol. % transition metal silicon carbide, between about 5 vol. % and about 40 vol. % transition metal carbide, or between about 5 vol. % and about 20 vol. % transition metal carbide.

Doped CMAS-resistant EBC layer 34 and optional bond layer 36 may be deposited on substrate 32 using any suitable technique including, for example, plasma spraying, suspension plasma spray, plasma spray physical vapor deposition, physical vapor deposition, chemical vapor deposition, slurry deposition, directed vapor deposition, electron beam physical vapor deposition, or the like. For example, CMAS-resistant TBC layer 34 may be deposited using plasma spraying, wherein each or the respective components (e.g. ytterbium silicate and calcia) are provided as a relatively fine powder (e.g., an average particle size of less than about 5 micrometers) and either mixed together prior to being sprayed or mixed as a result of the spraying process.

In some examples, bond layer 36 may be applied using a slurry deposition infiltration process. For example, when bond layer 36 includes silicon metal and one or more transition metal carbides, the transition metal carbide(s) may be deposited by a slurry application (e.g., spray coating, spin coating, dip coating, brushing, or the like) where the transition metal carbide(s) are mixed with solvent (e.g., water, ethanol, isopropyl alcohol, methyl ethyl ketone, toluene, or the like) and applied to substrate 32. In some examples, the slurry mixture may additionally include a binder (e.g. polyethylene glycol, acrylate co-polymers, latex co-polymers, polyvinyl pyrrolidone co-polymers, polyvinyl butyral, or the like), a dispersant (e.g., ammonium polyacrylate, polyvinyl butyral, a phosphate ester, polyethylene imine, BYK® 110 (available from Byk USA, Inc., Wallingford Connecticut), or the like), or the like. Once deposited, the slurry may be at least partially dried to remove the solvent followed by a silicon melt infiltration process.

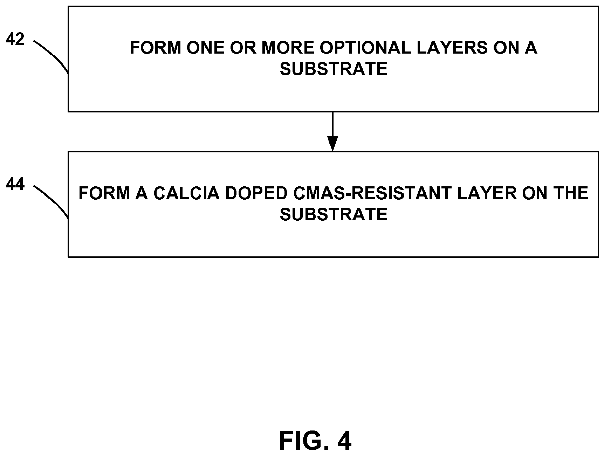

FIG. 4 is a flow diagram illustrating an example technique for forming article 10 including substrate 12, doped CMAS-resistant layer 14 on substrate 12, and any optional layers 16, 18 (e.g., a bond layer) deposited between doped CMAS-resistant layer 14 and substrate 12. The technique of FIG. 4 will be described with concurrent reference to articles 10, 20, 30 of FIGS. 1-3, although the technique of FIG. 4 may be used to form different articles, and articles 10, 20, 30 may be formed using a different technique.

The technique of FIG. 4 optionally includes forming one or more optional layers 16, 18 on at least a portion of substrate 12 (42). In some examples, the one or more optional layers 16, 18 may include a bond layer (e.g., optional bond layer 26, 36). The one or more optional layers 16, 18 may be deposited on the surface of substrate 12 using any suitable technique including, for example, plasma spraying, suspension plasma spray, plasma spray physical vapor deposition, physical vapor deposition, chemical vapor deposition, directed vapor deposition, electron beam physical vapor deposition, or the like. In other examples, one or more optional layers 16, 18 (e.g., bond layer 36) may be formed on the surface of substrate 12 (42) using a slurry-based colloidal processing technique followed by silicon melt infiltration.

The type, composition, and deposition technique for the one or more optional layers 16, 18 may depend on a variety of factors including, for example, the type of underlying substrate 12 (e.g., high strength metal alloy, ceramic, or CMC), the desired properties of the layer (e.g., diffusion barrier characteristics), the desired CTE matching parameters, the composition of doped CMAS-resistant layer 14, or combinations thereof.

The technique of FIG. 4 also includes forming doped CMAS-resistant layer 14 on substrate 12 (44). In some examples, doped CMAS-resistant layer 14 may be deposited directly on substrate 12, while in other examples one or more optional intermediate layers 16, 18 may separate substrate 12 and doped CMAS-resistant layer 14.

Doped CMAS-resistant layer 14 includes a calcia dopant and may be configured as either a TBC or EBC layer. In some examples when doped CMAS-resistant layer 14 is a TBC layer (e.g., doped CMAS-resistant TBC layer 24), the layer may include the calcia dopant, zirconia or hafnia, and one or more rare earth oxides. For example, doped CMAS-resistant TBC layer 24 may include a mixture of zirconia, yttria, and calcia (e.g., 7-14 mol.% calcia and yttria, and 86-93 mol.% zirconia as deposited). In some examples in which doped CMAS-resistant layer 14 is an EBC layer (e.g., doped CMAS-resistant EBC layer 34), the layer may include the calcia dopant and one or more rare earth silicates. For example, doped CMAS-resistant EBC layer 34 may include a mixture of ytterbium silicate and calcia (e.g., 2-14 mol.% calcia and 86-98 mol.% ytterbium disilicate as deposited).

The configuration of doped CMAS-resistant layer 14 as either an EBC or TBC may depend on the underlying substrate 12 material. For example, when substrate 12 includes a high strength metal alloy (e.g., Ni or Co based superalloy), doped CMAS-resistant layer 14 may be configured as a TBC layer (e.g., doped CMAS-resistant TBC layer 24). In other examples when substrate 12 includes a ceramic or CMC (e.g., silicon carbide CMC), doped CMAS-resistant layer 14 may be configured as an EBC layer (e.g., doped CMAS-resistant EBC layer 34).

Doped CMAS-resistant layer 14 may be deposited using any suitable technique including, for example, plasma spraying, suspension plasma spray, plasma spray physical vapor deposition, physical vapor deposition, chemical vapor deposition, directed vapor deposition, electron beam physical vapor deposition, or the like. For example, doped CMAS-resistant layer 14 may be deposited using plasma spraying, wherein each or the respective components (e.g. calcia, zirconia/hafnia and rare earth oxide (e.g., for TBC), rare earth silicate (e.g., for EBC)) are provided as a relatively fine powder. In some examples, the respective powers can be mechanically prior to the spray deposition process or may be mixed as a result of the spraying process.

Various examples have been described. These and other examples are within the scope of the following claims.

## Claims

1. An article (10:20:30) for a high-temperature mechanical system comprising:
a substrate (12:22:32); and
a doped calcia-magnesia-alumina-silicate resistant (doped CMAS-resistant) layer (14:24:34) on the substrate (12:22:32), wherein the doped CMAS-resistant layer (14:24:34) is a thermal barrier coating or an environmental barrier coating, and wherein the doped CMAS-resistant layer (14:24:34) comprises a calcia dopant.

2. The article (10:20:30) of Claim 1, further comprising a bond layer (16,18:26:36) between the substrate (12:22:32) and the doped CMAS-resistant layer (14:24:34).

3. The article (10:20) of Claim 1, wherein the substrate (12:22) comprises a high strength metal alloy, and the doped CMAS-resistant layer (14:24) is a thermal barrier coating comprising:
zirconia or hafnia;
the calcia dopant; and
at least one rare earth oxide.

4. The article (10:20) of Claim 3, wherein the doped CMAS-resistant layer (14:24), as deposited, comprises between about 86 and about 93 mole percent (mol.%) zirconia or hafnia and between about 7 and about 14 mol.% of a combination of the calcia dopant and the at least one rare earth oxide.

5. The article (10:20) of Claim 3 or Claim 4, wherein the at least one rare earth oxide comprises yttria.

6. The article (10:20) of any one of Claims 3 to 5, further comprising a bond layer (16,18:26) between the doped CMAS-resistant layer (14:24) and the substrate (12:22), the bond layer (16,18:26) comprising a metal alloy.

7. The article (10:30) of Claim 1, wherein the substrate (12:32) comprises a ceramic or ceramic matrix composite (CMC) and the doped CMAS-resistant layer (14:34) is an environmental barrier coating comprising:
at least one rare earth silicate; and
the calcia dopant.

8. The article (10:30) of Claim 7, wherein the doped CMAS-resistant layer (14:34) as deposited comprises between about 86 and about 93 mole percent (mol.%) of the at least one rare earth silicate and between about 7 and about 14 mol.% of the calcia dopant.

9. The article (10:30) of Claim 7 or Claim 8, the at least one rare earth silicate comprises ytterbium silicate.

10. The article (10:30) of any one of claims 7 to 9, further comprising a bond layer (16,18:36) between the doped CMAS-resistant layer (14:34) and the substrate (12:32), the bond layer comprising silicon.

11. A method of forming an article (10:20:30) for a high-temperature mechanical system, the method comprising:
forming a doped calcia-magnesia-alumina-silicate resistant (doped CMAS-resistant) layer (14:24:34) on the substrate (12:22:32), wherein the doped CMAS-resistant layer (14:24:34) comprises a thermal barrier coating (14:24) or an environmental barrier coating (14:34), and wherein the doped CMAS-resistant layer (14:24:34) comprises a calcia dopant.

12. The method of Claim 11, wherein forming the doped CMAS-resistant layer (14:24:34) comprises plasma spraying a fine particle mixture on the substrate (12:22:32), the fine particle mixture comprising:
the calcia dopant; and
one of the following:
at least one rare earth silicate; or
a mixture of at least one rare earth oxide and zirconia or hafnia.

13. The method of Claim 12, wherein the doped CMAS-resistant layer (14:24:34) as deposited comprises between about 86 and about 93 mole percent (mol.%) of the at least one rare earth silicate and between about 7 and about 14 mol.% of the calcia dopant, wherein the at least one rare earth silicate comprises ytterbium silicate.

14. The method of Claim 12, wherein the doped CMAS-resistant layer (14:24:34) as deposited comprises between about 86 and about 93 mole percent (mol.%) zirconia or hafnia and between about 7 and about 14 mol.% of the calcia dopant and the at least one rare earth oxide.

15. The method of any one of Claims 11 to 14, further comprising:
forming a bond layer (16,18:26:36) on the substrate (12:22:32), wherein the bond layer (16,18:26:36) is between the doped CMAS-resistant layer (14:24:34) and the substrate (12:22:32).
